# EUROPEAN PATENT APPLICATION

(11) **EP 4 769 970 A1**
(43) Date of publication of application: **01.07.2026**
(21) Application number: 25184481.7
(22) Date of filing: 23.06.2025
(51) Int. Cl.: H04B 7/185, G08G 5/26

(54) **SYSTEM, APPARATUS AND METHOD FOR OPERATING MULTIPLE COMMUNICATION LINKS OF MOBILITY DEVICE**

(30) Priority: 31.12.2024 KR 20240202723
(71) Applicant: Hyundai Motor Company, Seoul 06797 (KR); Kia Corporation, Seoul 06797 (KR)
(72) Inventor: LIM, Jun Young, 18280 Hwaseong-si, Gyeonggido (KR); LEE, Si On, 18280 Hwaseong-si, Gyeonggido (KR)
(74) Representative: Viering, Jentschura & Partner mbB Patent- und Rechtsanwälte

(57) **Abstract**

A for operating multiple communication links of a mobility device can include a remotely pilot station that transmits each data packet via at least two communication links of the multiple communication links and the mobility device. The mobility device is configured to: based on a state of the transmitted each data packet, detect a loss link in which a loss occurs among the at least two communication links, determine whether the detected loss link is identical to a previously selected initial link, and, based on a determination that the loss link and the initial link are identical, select a next-priority link different from the initial link among the multiple communication links.

## Description

### CROSS-REFERENCE TO RELATED APPLICATION

This application claims the benefit of priority to Korean Patent Application No. 10-2024-0202723, filed in the Korean Intellectual Property Office on December 31, 2024, the entire contents of which are incorporated herein by reference.

### TECHNICAL FIELD

The present disclosure relates to a system, an apparatus, and a method for operating multiple communication links of a mobility device.

### BACKGROUND

With advances in mobility technology, mobility devices are increasingly being deployed across a wide range of applications, including cargo transport, crop pest control, firefighting, law enforcement, cadastral surveying, port management, underwater drones, and more.

The term "mobility device" may collectively refer to an integrated system including an aerial vehicle that operates autonomously or semi-autonomously along a predefined flight path without an onboard pilot, as well as associated mission equipment, ground control systems, communication systems, support equipment, and operational personnel.

A ground control system (GCS), ground radio station (GRS), or unmanned aircraft (UA) may serve as a remote pilot station to control or monitor the mobility device along its flight route. Each remotely pilot station supports communication within a defined coverage area.

Due to the operational nature of such mobility systems, communication between the mobility device and the remote pilot station may fail if the device moves beyond the station's coverage area, experiences an airframe anomaly, or encounters a communication malfunction. Loss of connectivity with the remote pilot station may place the mobility device in a high-risk or hazardous situation.

### SUMMARY

The present disclosure is directed to a system, an apparatus, and a method for operating multiple communication links of a mobility device to allow a following mobility device to store and use information about a geographical location where a data link loss occurs during navigation of the following mobility device to predict a data link disconnection in the navigation path and propose a measure.

According to an aspect of the present disclosure, a system for operating multiple communication links of a mobility device can include a remotely pilot station configured to transmit each data packet via at least two communication links of the multiple communication links and the mobility device. The mobility device can be configured to, based on a state of the transmitted each data packet, detect a loss link in which a loss occurs among the at least two communication links, determine whether the detected loss link is identical to a previously selected initial link, and, based on a determination that the loss link and the initial link are identical, select a next-priority link different from the initial link among the multiple communication links.

In some implementations, the remotely pilot station can be configured to randomly select one initial link to be used in an airspace volume on a flight path before a forward mobility device included in the mobility device takes off among all the communication links. In some implementations, the mobility device can be configured to determine whether the loss link occurs based on whether a predetermined percentage or more of data within the data packet is received.

In some examples, the mobility device can be configured to, based on a determination that the loss link and the initial link are not identical, communicate with the remotely pilot station via the initial link. In some examples, the mobility device can be configured to detect a loss link area corresponding to a geographical location at which the loss link is detected, store loss information including the loss link area and a frequency band of the loss link, and transmit, to the remotely pilot station, the loss information.

In some examples, the mobility device can be configured to set a contact point between (i) a radius predetermined based on a first geographical point where the loss link is detected and (ii) a corridor where a forward mobility device flies to an entry point of the loss link area, and set a contact point between (i) a radius predetermined based on a last geographical point where the loss link is lastly detected and (ii) the corridor to an exit point of the loss link area.

In some examples, the remotely pilot station can be configured to store the loss information received from the mobility device, and transmit the loss information to a following mobility device configured to navigate using a same system associated with a forward mobility device included in the mobility device along a flight path of the forward mobility device.

According to another aspect of the present disclosure, an apparatus for operating multiple communication links of a mobility device can include a memory storing at least one instruction; and at least one processor configured to execute the at least one instruction to perform operations. The operations can include receiving, from a remotely pilot station, loss information including a frequency band of a loss link and a loss link area, the loss information being collected by a forward mobility device configured to navigate in front of a following mobility device that is configured to navigate behind the forward mobility device along a flight path of the forward mobility device, and changing, based on the following mobility device approaching the loss link area within a predetermined distance, an initial link to a next-priority link excluding the loss link among the multiple communication links.

In some implementations, the operations can include detecting, based on a state of each data packet received via the multiple communication links from the remotely pilot station, the loss link in which a loss occurs among all the multiple communication links, determining, based on the following mobility device not approaching the loss link area within the predetermined distance, whether the loss link is identical to the initial link, and changing, based on a determination that the loss link is identical to the initial link, the initial link to a next-priority link excluding the initial link among the multiple communication links.

In some implementations, the operations can include determining whether the following mobility device exits from the loss link area, and changing, based on the following mobility device exiting from the loss link area, a communication link to the initial link before the following mobility device approaches the loss link area.

According to another aspect of the present disclosure, a method for operating multiple communication links of a mobility device can include receiving, by a forward mobility device configured to navigate in front of a following mobility device, each data packet via at least two communication links; detecting, by the forward mobility device, a loss link in which a loss occurs among the at least two communication links based on a state of each data packet; determining, by the forward mobility device, whether the detected loss link is identical to a previously selected initial link; selecting, based on a determination the loss link and the initial link are identical, a next-priority link different from the initial link among the multiple communication links; and communicating, by the forward mobility device, with a remotely pilot station via the next-priority link.

In some implementations, the method can further include randomly selecting, by the remotely pilot station, one initial link to be used in an airspace volume on a flight path before the forward mobility device takes off among all the communication links, before the forward mobility device receives each data packet via each of the at least two communication links. In some implementations, detecting the loss link can include
determining whether the loss link occurs based on whether a predetermined percentage or more of data within the data packet is received.

In some examples, detecting the loss link can include detecting, by the forward mobility device, a loss link area corresponding to a geographical location at which the loss link is detected, storing, by the forward mobility device, loss information including the loss link area and a frequency band of the loss link, and transmitting, by the forward mobility device to the remotely pilot station, the loss information. In some examples, detecting of the loss link area corresponding to the geographical location can include setting, by the forward mobility device, a contact point between (i) a radius predetermined based on a first geographical point where the loss link is detected and (ii) a corridor where the forward mobility device flies to an entry point of the loss link area, and setting, by the forward mobility device, a contact point between (i) a radius predetermined based on a last geographical point where the loss link is lastly detected and (ii) the corridor to an exit point of the loss link area.

In some implementations, the method can further include storing, by the remotely pilot station, the loss information; and transmitting, by the remotely pilot station, the loss information to the following mobility device configured to navigate using a same system associated with the forward mobility device along a flight path of the forward mobility device. In some examples, the method can further include receiving, by the following mobility device, the loss information from the remotely pilot station, detecting, by the following mobility device, whether the following mobility device approaches the loss link area within a predetermined distance, changing, by the following mobility device, the initial link to a next-priority link excluding the initial link, based on the following mobility device approaching the loss link area within the predetermined distance, and communicating, by the forward mobility device, with the remotely pilot station, until the following mobility device deviates from the loss link area using the next-priority link.

In some examples, the method can further include receiving, by the following mobility device, the loss information from the remotely pilot station, receiving, by the following mobility device, each data packet via the multiple communication links from the remotely pilot station, detecting, by the following mobility device, whether the following mobility device approaches the loss link area withing a predetermined distance, detecting, by the following mobility device, the loss link in which a loss occurs among all the multiple communication links based on a state of each data packet, if the following mobility device does not approach closely to the loss link area within the predetermined distance, determining, by the following mobility device, whether the detected loss link is identical to the initial link, selecting, by the following mobility device, a next-priority link different from the initial link among the multiple communication links, if the loss link and the initial link are identical to each other, and communicating, by the following mobility device, with the remotely pilot station via the next-priority link.

In some examples, the method can further include changing, by the following mobility device, the initial link to the next-priority link different from the initial link among the multiple communication links with regard to the loss information, if the following mobility device approaches the loss link area within the predetermined distance, communicating, by the following mobility device, with the remotely pilot station via the next-priority link, determining, by the following mobility device, whether the following mobility device exits from the loss link area, and changing, by the following mobility device, the next-priority link to the initial link, if the following mobility device exits from the loss link area.

### BRIEF DESCRIPTION OF THE DRAWINGS

FIG. 1 is a diagram illustrating an example of a system for operating multiple communication links of a mobility device.
FIG. 2 is a block diagram illustrating an example of a mobility device.
FIG. 3 is an exemplary drawing for describing a method for detecting a loss link.
FIG. 4 is a flowchart for describing an example of a method for operating multiple communication links of a mobility device.
FIG. 5 is a flowchart for describing an example of a method for operating multiple communication links of a mobility device.

### DETAILED DESCRIPTION

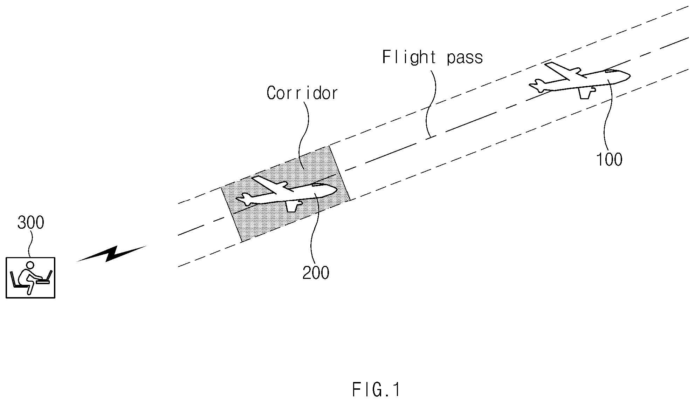

FIG. 1 is a diagram illustrating an example of a system for operating multiple communication links of a mobility device.

Referring to FIG. 1, the system for operating the multiple communication links of the mobility device can include a forward mobility device 100 navigating in front of a pre-specified flight path, a following mobility device 200 navigating behind the same path as the flight path along which the forward mobility device 100 is navigating, and a remotely pilot station (RPS) 300.

FIG. 1 illustrates a remotely-pilot aircraft (RPA) as an example of each of the mobility devices 100 and 200, but the present disclosure is not limited thereto. Each of the mobility devices 100 and 200 can be provided as a drone, an unmanned helicopter, an unmanned surveillance vehicle, a manned aerial vehicle, an unmanned aerial vehicle, a ground vehicle, a rail vehicle, a vessel, or the like. It is possible to adopt all mobilities, an operation associated with navigation of which is controlled by the RPS 300 located on the ground. Implementations disclosed in the present disclosure can be applied to the above-mentioned mobility device.

The mobility devices 100 and 200 can automatically navigate a predetermined navigation path under control of the RPS 300. For example, all operations associated with the navigation can be controlled by the RPS 300 in a communicable range between the RPS 300 and the mobility devices 100 and 200.

At least one processor provided in each of the mobility devices 100 and 200 can manage control authority, such as piloting of the mobility device, which can be integrally loaded into the mobility device to manage control authority of the RPS 300 for the mobility device or can be provided independently of the mobility device or in the RPS 300 to manage control authority for the mobility device.

The RPS 300 can be at least one of a ground control system (GCS), a ground radio station (GRS), or an unmanned aircraft (UA). A device capable of controlling the mobility devices 100 and 200 via wireless communication can be introduced as the RPS 300.

The RPS 300 can control an operation associated with navigation of the mobility devices 100 and 200 based on navigation path information that is predetermined for the mobility devices 100 and 200. For example, the navigation path information can include pieces of related information, such as a starting point, a destination, a flight time, a weather environment, or a corridor of each of the mobility devices 100 and 200.

The corridor is part of airbus blueprints, which refers to a specified navigation airspace range an aircraft should maintain when passing through a specified area. As depicted in FIG. 1, the corridor may have a virtual cylinder shape.

The RPS 300 and the mobility devices 100 and 200 can be connected with each other via communication, where the communication can refer to a command & control link (C2 link). The RPS 300 can perform a command and control of each of the mobility devices 100 and 200 via the C2 link.

Communication lines (or data links or frequency bands) of the C2 link can be composed of multiples rather than one. For example, the communication lines of the C2 link can be provided as ultra high frequency (UHF), C-band, 4th generation (4G), 5th generation (5G), or the like.

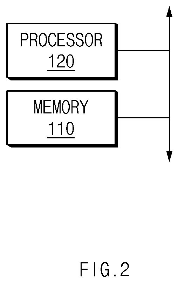

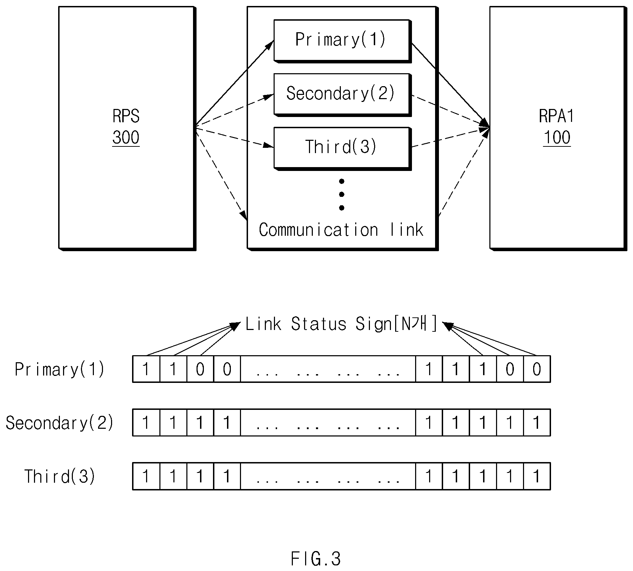

FIG. 2 is a block diagram illustrating an example of a mobility device. FIG. 3 is an exemplary drawing for describing a method for detecting a loss link.

As shown in FIG. 2, each of the mobility devices 100 and 200 can include a memory 110 for storing at least one instruction and at least one processor 120 for executing the at least one instruction.

An RPS 300 can randomly select one link, among at least two available links, to be used in an airspace volume on a flight path initially before a forward mobility device 100 takes off. The link selected for communication with the forward mobility device 100 by the RPS 300 can refer to an initial link.

Next, the RPS 300 can transmit each data packet via the at least two communication links provided for communication with the forward mobility device 100.

Thus, the forward mobility device 100 can detect a loss link in which a loss occurs among all the links based on states of the respective data packets received via all the links from the RPS 300.

In some implementations, the forward mobility device 100 can determine a link as a loss link based on received data from the respective data packet that meeting or exceeding a predetermined percentage.

A description will be given in detail of the process of determining whether the loss link occurs in the forward mobility device 100 with reference to FIG. 3.

The data packet can be received at the same speed via each of all multiple links connected between the RPS 300 and the forward mobility device 100. The forward mobility device 100 can calculate the percentage of data packets normally received during a predetermined certain time to determine if the link is a loss link.

"1" can indicate that data is received in accordance with the interface format within a predetermined time. "0" can indicate either that no data is received within the predetermined time or that data is received but does not conform to the interface format.

The forward mobility device 100 can add "0" referring to reception failure to a link status sign, if data reception fails, and can add "1" to the link status sign, if the data reception succeeds. The forward mobility device 100 can count the number of "1" referring to the case in which data is normally received among values of the link status sign and obtain a percentage at which the data is normally received among all the pieces of data of the data packets.

For example, if the number of pieces of normally received data is A and the array size of the link status sign is N, the percentage of normal data can be obtained as Y(%) (= A/N*100).

In some implementations, if the Y value is less than a Z value predetermined as criteria for determining the loss link, the link can be determined as the loss link. If the Y value is greater than the predetermined Z value, the link can be determined as a normal link.

The process of determining the loss link can be applied to each of a first link (Primary(1)), a second link (Secondary (2)), and a third link (Third(3)) in the same manner. In FIG. 3, only the first link (Primary(1)), the second link (Secondary(2)), and the third link (Third(3)) are arranged, but the number of data links is not limited thereto.

Herein, an array size N of the link status sign for detecting the loss link can be set based on at least one of an execution period of a system for operating multiple communication links of the mobility device or a message transmission and reception period of a data link.

In some implementations, the array size N of the link status sign can be set in proportional to the execution period of the system for operating the multiple communication links of the mobility device or the message transmission and reception period of the data link.

The forward mobility device 100 can determine whether the detected loss link is the same link as the initial link. If the loss link is the same as the initial link, the forward mobility device 100 can select a next-priority link different from the initial link among all the links. In some implementations, the forward mobility device 100 can select the second link (Secondary (2)) as the next-priority link. Next, the forward mobility device 100 can start communicating with the RPS 300 via the second link (Secondary(2)) instead of the initial link.

The forward mobility device 100 can detect a loss link area (LLA) corresponding to a geographical location where the loss link is detected.

In some implementations, the forward mobility device 100 can set a contact point between a radius predetermined based on a first geographical point where the loss link is detected and a corridor where the forward mobility device 100 flies to an entry point of the LLA. Furthermore, the forward mobility device 100 can set a contact point between a radius predetermined based on a last geographical point where the loss link is lastly detected and the corridor to an exit point of the LLA. The LLA can be set based on the entry point and the exit point, which are set. Herein, the geographical point can refer to GPS coordinates.

The forward mobility device 100 can generate and store loss information including the LLA and a frequency band of the loss link in the memory 110 and transmit the loss information to the RPS 300.

In some implementations, if the loss link and the initial link are not the same as each other, the forward mobility device 100 can continue communicating with the RPS 300 using the initial link and perform control and command instructions received from the RPS 300.

The RPS 300 can transmit the loss information to a following mobility device 200.

The following mobility device 200 can refer to a device that navigates using the same system as a navigation system of the forward mobility device 100, following the same predetermined flight path. For example, the following mobility device 200 can be an aircraft navigating in the same manner as the forward mobility device 100.

Like the forward mobility device 100, the RPS 300 can randomly select one link to be used in an airspace volume on a flight path before the following mobility device 200 takes off among all the at least two links.

In some implementations, the following mobility device 200 can be controlled based on the same system as the forward mobility device 100, the initial link selected by the RPS 300 can also be selected as the same link as the initial link selected by the forward mobility device 100.

The following mobility device 200 can receive the loss information from the RPS 300. For example, the following mobility device 200 can receive the loss information generated by the forward mobility device 100 from the RPS 300.

In some implementations, the following mobility device 200 can detect whether the following mobility device 200 approaches closely to the LLA within a predetermined distance, while navigating behind the forward mobility device 100 along the same path as the navigation path of the forward mobility device 100.

If it is detected that the following mobility device 200 does not approach closely to the LLA within the predetermined distance as a result of the detection, the following mobility device 200 can maintain the initial link and communicate with the RPS 300.

On the other hand, if it is detected that the following mobility device 200 approaches closely to the LLA within the predetermined distance as a result of the detection, the following mobility device 200 can change the initial link to the next-priority link.

The reason why the following mobility device 200 changes from the initial link to the next-priority link when approaching the LLA because the forward mobility device 100 confirms that the initial link is a loss link while navigating the LLA.

Thus, the following mobility device 200 can communicate with the RPS 300 until deviating from the LLA based on the next-priority link. If deviating from the LLA, the following mobility device 200 can change the next-priority link to the initial link, which is used before approaching closely to the LLA, again. Alternatively, although deviating from the LLA, the following mobility device 200 can continuously use the next-priority link.

In some implementations, after receiving the loss information from the RPS 300, the following mobility device 200 can receive each data packet via each of all the links from the RPS 300. If not approaching closely to the LLA within the predetermined distance when detecting whether the following mobility device 200 approaches closely to the LLA within the predetermined distance, the following mobility device 200 can detect a loss link in which a loss occurs among all the links based on the state of each data packet. For example, the following mobility device 200 can determine whether the loss link is the same link as the initial link. If the loss link and the initial link are the same as each other, the following mobility device 200 can select a next-priority link different from the initial link among all the links and perform data communication with the RPS 300 via the selected next-priority link. If the loss link and the initial link are not the same as each other, the following mobility device 200 can perform data communication with the RPS 300 via the initial link.

In some implementations, if approaching closely to the LLA within the predetermined distance, the following mobility device 200 can change the initial link previously selected by the RPS 300 to the next-priority link and communicate with the RPS 300 via the next-priority link.

For example, if approaching closely to the LLA within the predetermined distance and if using the initial link, the following mobility device 200 can immediately change a data link to the next-priority link without the process of detecting the loss link based on the state of each data packet.

If the following mobility device 200 exits from the LLA as a result of determining whether the following mobility device 200 exits from the LLA, it can return and change the next-priority link to the initial link. Alternatively, the following mobility device 200 can change the data link to another link except for the initial link or the next-priority link.

The following mobility device 200 can transmit information about the changed link to the RPS 300 and perform a command and control through the RPS 300 using the changed link, until the navigation ends. If the navigation of the following mobility device 200 ends, the RPS 300 can store a navigation log of the following mobility device 200.

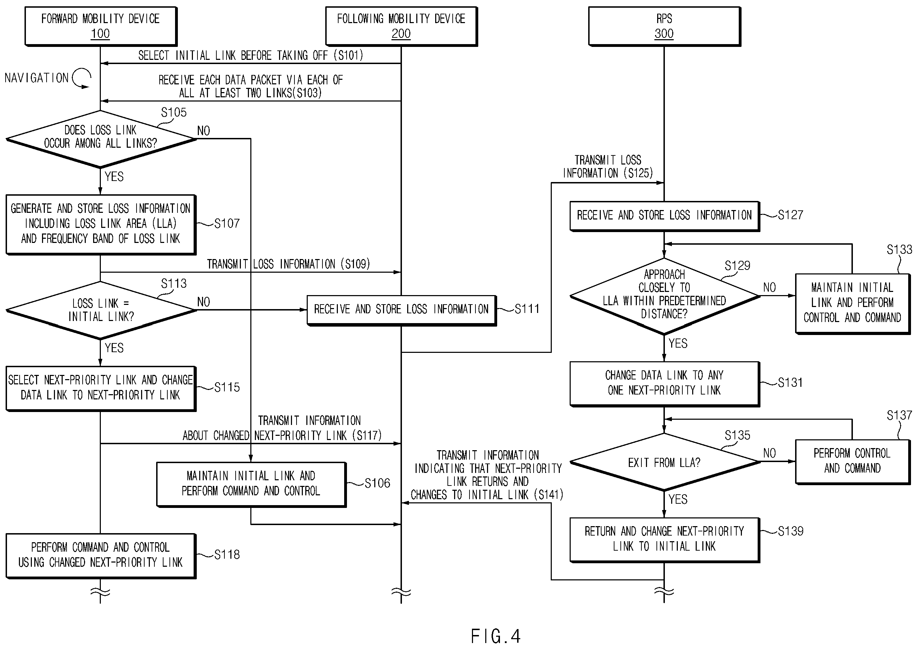

FIG. 4 is a flowchart for describing an example of a method for operating multiple communication links of a mobility device. A description duplicated with the configuration and function described above with reference to FIGS. 1 and 3 may be partially omitted.

Referring to FIG. 4, in S101, an RPS 300 can randomly assign one initial link to be used in an airspace volume on a flight path before a forward mobility device 100 takes off among all links. Thus, the forward mobility device 100 can navigate along a predetermined flight path using the initial link.

In S103, the forward mobility device 100 that is navigating can receive each data packet via each of at least two links provided for data communication with the RPS 300.

Next, in S105, the forward mobility device 100 can detect a loss link in which a loss occurs among all the links based on a state of each data packet. For example, the forward mobility device 100 can determine whether the loss link occurs. In some implementations, the forward mobility device 100 can determine whether the loss link occurs based on whether data of a predetermined percentage or more among pieces of data included in the data packets is received. The description is given above of the method for detecting the loss link among all the links in the forward mobility device 100 with reference to FIG. 3.

If it is detected that the loss link occurs in S105, in S107, the forward mobility device 100 can generate and store loss information including a loss link area (LLA) and a frequency band of the loss link. In S109, the forward mobility device 100 can transmit the loss information to the RPS 300.

Herein, the forward mobility device 100 can set a contact point between a radius predetermined based on a first geographical point where the loss link is detected and a corridor where the forward mobility device 100 flies to an entry point of the LLA and set a contact point between a radius predetermined based on a last geographical point where the loss link is lastly detected and the corridor to an exit point of the LLA, thus setting the LLS.

If it is detected that the loss link occurs, in S113, the forward mobility device 100 can determine whether the detected loss link is the same link as the previously selected initial link.

If the loss link and the initial link are identical, in S115, the forward mobility device 100 can select a next-priority link different from the initial link among all the links and change a data link to the selected next-priority link.

Next, in S117, the forward mobility device 100 can transmit information about the changed next-priority link to the RPS 300.

In S118, the forward mobility device 100 can perform a command and control through the RPS 300 using the changed next-priority link.

In S111, the RPS 300 can receive and store the loss information transmitted from the forward mobility device 100. In S125, the RPS 300 can transmit the loss information to a following mobility device 200 that navigates using the same operation system as the forward mobility device 100 and behind the forward mobility device 100 along the same flight path as the flight path of the forward mobility device 100.

In S127, the following mobility device 200 can receive and store the loss information from the RPS 300.

In S129, the following mobility device 200 can detect whether the following mobility device 200 approaches closely to the LLA within a predetermined distance.

If approaching closely to the LLA within the predetermined distance, in S131, the following mobility device 200 can change a data link to any one next-priority link except for the initial link among all the links.

Thus, in S135 and S137, the following mobility device 200 can communicate with the RPS 300 until deviating from the LLA using the next-priority link and perform control and a command through the RPS 300.

If deviating from the LLA, in S139, the following mobility device 200 can return and change the next-priority link to the initial link which is used before approaching closely to the LLA. In S141, the following mobility device 200 can transmit information indicating that the next-priority link returns and changes to the initial link to the RPS 300.

Thereafter, if the RPS 300 commands the following mobility device 200 to end the flight, the following mobility device 200 can store flight data associated with the flight and transmit the flight data to the RPS 300. Thus, the RPS 300 can generate and store a flight log based on the received flight data and end the flight.

In some implementations, the following mobility device 200 can maintain the next-priority link, although deviating from the LLA, or change the data link to another link except for the next-priority link and the initial link. At this time, the following mobility device 200 can monitor a link status through the RPS 300.

If not approaching closely to the LLA within the predetermined distance in S129, in S133, the following mobility device 200 can maintain the initial link and perform control and command instructions from the RPS 300. At this time, the following mobility device 200 can monitor a link status through the RPS 300.

In some implementations, if it is determined that the loss link and the initial link are not identical in S113, in S111, the forward mobility device 100 can maintain the initial link and perform a command and control from the RPS 300 via the initial link.

Thereafter, if the RPS 300 commands the forward mobility device 100 to end the flight, the forward mobility device 100 can store flight data associated with the flight and transmit the flight data to the RPS 300. Thus, the RPS 300 can generate and store a flight log based on the received flight data and end the flight.

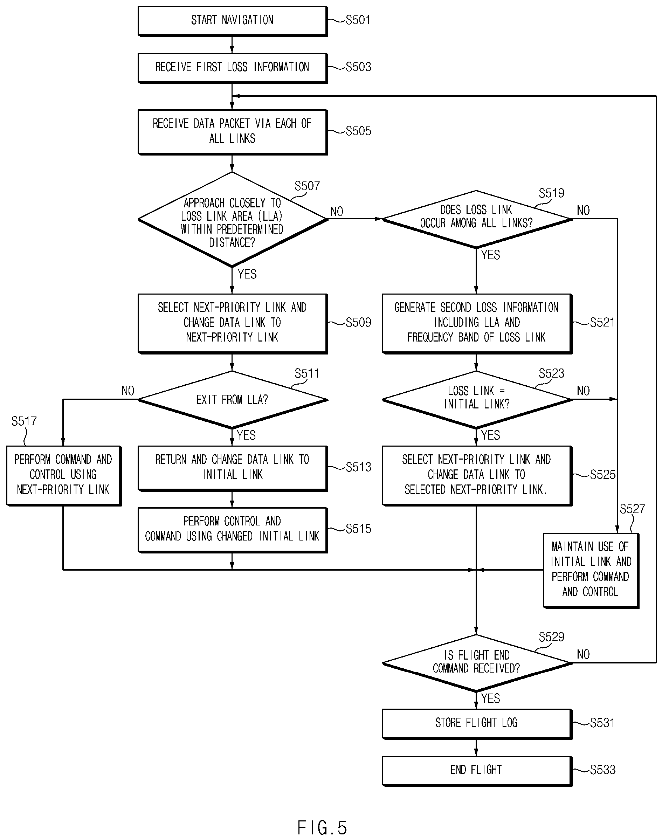

FIG. 5 is a flowchart for describing an example of a method for operating multiple communication links of a mobility device. A description duplicated with the configuration and function described above with reference to FIGS. 1 and 3 may be partially omitted.

A difference from the embodiment shown in FIG. 4 is that a following mobility device 200 internally verifies whether a loss link occurs in all links at a predetermined period, if not approaching closely to an LLA within a predetermined distance or before approaching closely to the LLA within the predetermined distance, although receiving loss information from an RPS 300 in S503. For example, the following mobility device 200 can periodically monitor whether the loss link occurs, until its navigation ends.

To this end, in S501 and S503, the following mobility device 200 can start navigation and receive first loss information generated by the forward mobility device 100 from the RPS 300. In S505, the following mobility device 200 can receive a data packet via each of all links from the RPS 300. In S519, the following mobility device 200 can detect whether a loss link occurs among all the links based on a state of the data packet, if not approaching closely to the LLA within the predetermined distance or until approaching closely to the LLA within the predetermined distance. If it is detected that the loss link occurs in S519, in S521, the following mobility device 200 can generate second loss information. In S523, the following mobility device 200 can determine whether the detected loss link is the same link as the previously selected initial link. If the loss link and the initial link are identical, in S525, the following mobility device 200 can select a next-priority link different from the initial link among all the links and change a data link to the selected next-priority link.

If receiving a flight end command from the RPS 300 in S529, in S531, the following mobility device 200 can store a flight log associated with flight. In S531, the following mobility device 200 can transmit the flight log to the RPS 300. In S533, the following mobility device 200 may end the flight.

If it is determined that the loss link does not occur in S519, in S527, the following mobility device 200 can maintain the use of the initial link and perform a command and control using the RPS 300 via the initial link.

If approaching closely to the LLA within the predetermined distance in S507, in S509, the following mobility device 200 can select a next-priority link except for the initial link among all the links based on the loss information and change the data link to the next-priority link.

For example, if approaching closely to the LLA within the predetermined distance and if using the initial link, the following mobility device 200 can immediately change the data link to the next-priority link without the process of detecting the loss link based on the state of each data packet. This is because it is verified that whether the initial link is communicatively connected with the LLA is ready lost by the forward mobility device 100.

Next, if exiting from the LLA in S511, in S513, the following mobility device 200 can return and change the data link to the initial link used before approaching closely to the LLA. In S515, the following mobility device 200 can perform a command and control of the RPS 300 using the initial link.

If navigating within the LLA in S511, in S517, the following mobility device 200 can perform a command and control of the RPS 300 using the next-priority link selected in S509.

If deviating from the LLA in S511, in S513, the following mobility device 200 can return and change the data link to the initial link. In S515, the following mobility device 200 can perform control and a command until receiving a flight end command from the RPS 300 using the changed initial link.

According to implementations of the present disclosure, the following mobility device can store and use information about a geographical location where the data link loss occurs, if the loss link occurs during navigation of the following mobility device, thus predicting a data link disconnection in the navigation path and proposing a measure.

Thus, the system for operating the multiple communication links of the mobility device can increase stability of a data link, if operating the mobility device, and increase navigation stability, if operating multiple mobility devices.

In addition, the system for operating the multiple communication links of the mobility device can propose a communication infrastructure improvement method via local communication restricted area search of the corridor, if operating advanced air mobility (AAA) in the future.

Furthermore, the system for operating the multiple communication links of the mobility device can reduce costs by identifying an optimal point of improvement of a communication infrastructure for operating the mobility device and ensure the acceptance of unmanned navigation according to an increase in operation stability.

According to implementations of the present disclosure, the following mobility device can store and use information about a geographical location where the data link loss occurs during navigation of the following mobility device, thus predicting a data link disconnection in the navigation path and proposing a measure.

Thus, the system for operating the multiple communication links of the mobility device can increase stability of a data link, if operating the mobility device, and increase navigation stability, if operating multiple mobility devices.

In addition, the system for operating the multiple communication links of the mobility device can propose a communication infrastructure improvement method via local communication restricted area search of the corridor, if operating advanced air mobility (AAA) in the future.

Furthermore, the system for operating the multiple communication links of the mobility device can reduce costs by identifying an optimal point of improvement of a communication infrastructure for operating the mobility device and ensure the acceptance of unmanned navigation according to an increase in operation stability.

## Claims

1. A system for operating multiple communication links of a mobility device, the system comprising:
a remotely pilot station configured to transmit each data packet via at least two communication links of the multiple communication links; and
the mobility device configured to:
based on a state of the transmitted each data packet, detect a loss link in which a loss occurs among the at least two communication links,
determine whether the detected loss link is identical to a previously selected initial link, and
based on a determination that the loss link and the initial link are identical, select a next-priority link different from the initial link among the multiple communication links.

2. The system of claim 1, wherein the remotely pilot station is configured to:
randomly select one initial link to be used in an airspace volume on a flight path before a forward mobility device included in the mobility device takes off among all the communication links.

3. The system of claim 1 or 2, wherein the mobility device is configured to:
determine whether the loss link occurs based on whether a predetermined percentage or more of data within the data packet is received.

4. The system of anyone of claims 1-3, wherein the mobility device is configured to:
based on a determination that the loss link and the initial link are not identical, communicate with the remotely pilot station via the initial link.

5. The system of anyone of claims 1-4, wherein the mobility device is configured to:
detect a loss link area corresponding to a geographical location at which the loss link is detected,
store loss information including the loss link area and a frequency band of the loss link, and
transmit, to the remotely pilot station, the loss information.

6. The system of claim 5, wherein the mobility device is configured to:
set a contact point between (i) a radius predetermined based on a first geographical point where the loss link is detected and (ii) a corridor where a forward mobility device flies to an entry point of the loss link area, and
set a contact point between (i) a radius predetermined based on a last geographical point where the loss link is lastly detected and (ii) the corridor to an exit point of the loss link area.

7. The system of claim 5 or 6, wherein the remotely pilot station is configured to:
store the loss information received from the mobility device, and
transmit the loss information to a following mobility device configured to navigate using a same system associated with a forward mobility device included in the mobility device along a flight path of the forward mobility device.

8. An apparatus for operating multiple communication links of a mobility device, the apparatus comprising:
a memory storing at least one instruction; and
at least one processor configured to execute the at least one instruction to perform operations comprising:
receiving, from a remotely pilot station, loss information including a frequency band of a loss link and a loss link area, the loss information being collected by a forward mobility device configured to navigate in front of a following mobility device that is configured to navigate behind the forward mobility device along a flight path of the forward mobility device; and
changing, based on the following mobility device approaching the loss link area within a predetermined distance, an initial link to a next-priority link excluding the loss link among the multiple communication links.

9. The apparatus of claim 8, wherein the operations comprise:
detecting, based on a state of each data packet received via the multiple communication links from the remotely pilot station, the loss link in which a loss occurs among all the multiple communication links,
determining, based on the following mobility device not approaching the loss link area within the predetermined distance, whether the loss link is identical to the initial link, and
changing, based on a determination that the loss link is identical to the initial link, the initial link to a next-priority link excluding the initial link among the multiple communication links.

10. The apparatus of claim 8 or 9, wherein the operations comprise:
determining whether the following mobility device exits from the loss link area, and
changing, based on the following mobility device exiting from the loss link area, a communication link to the initial link before the following mobility device approaches the loss link area.

11. A method for operating multiple communication links of a mobility device, the method comprising:
receiving, by a forward mobility device configured to navigate in front of a following mobility device, each data packet via at least two communication links;
detecting, by the forward mobility device, a loss link in which a loss occurs among the at least two communication links based on a state of each data packet;
determining, by the forward mobility device, whether the detected loss link is identical to a previously selected initial link;
selecting, based on a determination the loss link and the initial link are identical, a next-priority link different from the initial link among the multiple communication links; and
communicating, by the forward mobility device, with a remotely pilot station via the next-priority link.

12. The method of claim 11, further comprising:
randomly selecting, by the remotely pilot station, one initial link to be used in an airspace volume on a flight path before the forward mobility device takes off among all the communication links, before the forward mobility device receives each data packet via each of the at least two communication links.

13. The method of claim 11 or 12, wherein detecting the loss link comprises:
determining whether the loss link occurs based on whether a predetermined percentage or more of data within the data packet is received.

14. The method of anyone claims 11-13, wherein detecting the loss comprises:
detecting, by the forward mobility device, a loss link area corresponding to a geographical location at which the loss link is detected,
storing, by the forward mobility device, loss information including the loss link area and a frequency band of the loss link, and
transmitting, by the forward mobility device to the remotely pilot station, the loss information.

15. The method of claim 14, wherein detecting of the loss link area corresponding to the geographical location comprises:
setting, by the forward mobility device, a contact point between (i) a radius predetermined based on a first geographical point where the loss link is detected and (ii) a corridor where the forward mobility device flies to an entry point of the loss link area, and
setting, by the forward mobility device, a contact point between (i) a radius predetermined based on a last geographical point where the loss link is lastly detected and (ii) the corridor to an exit point of the loss link area.
